# EUROPEAN PATENT APPLICATION

(11) **EP 4 579 523 A1**
(43) Date of publication of application: **02.07.2025**
(21) Application number: 23383382.1
(22) Date of filing: 27.12.2023
(51) Int. Cl.: G06N 3/042, G06N 3/048, G06N 3/045, G06N 3/08, G06N 10/60

(54) **CONTROL WITH SCALABLE, EFFICIENT INFERENCE BASED ON NON-LINEAR TENSOR NETWORKS**

(71) Applicant: Multiverse Computing S.L., 20014 Donostia - San Sebastian (ES)
(72) Inventor: SUKHBINDER, Singh, Toronto (CA); ORUS, Roman, Donostia - San Sebastian (ES)
(74) Representative: Elion IP, S.L.

(57) **Abstract**

An apparatus or system configured to: provide a predetermined machine learning routine in the form of a tensorized neural network and associated with a target machine or system or process, with the tensorized neural network comprising a plurality of layers and one or more non-linearities per layer applicable to each tensor of the tensor network of the respective layer; and produce at least one output about the target machine or system or process, the at least one output being inferred by the provided predetermined machine learning routine upon inputting a data set therein.

## Description

### TECHNICAL FIELD

The present disclosure relates to the field of machine learning for the control of machines, systems and/or processes. More specifically, the disclosure relates to the provision and use of a non-linear tensor network as a machine learning routine or algorithm for inference and control regarding machines, systems and/or processes.

### BACKGROUND

The popularity of deep learning techniques has grown significantly over the last few years. The capabilities of deep learning when it comes to solving different problems are very large. Accordingly, many industries and applications have benefitted from deep learning by incorporating such techniques in computing devices. For example, applications such as predictive analytics, anomaly detection, image classification, object recognition, etc. have seen huge improvements as they embraced machine learning routines, especially deep learning ones.

In fact, many machines, systems and processes, namely targets, could be partially or completely monitored and controlled by way of machine learning routines. Such routines enable detecting the status of the targets every time there is a new situation or configuration that has not taken place before at the targets, whereas classical monitoring and control schemes map several parameters and/or measurements about the targets, and based on their values falling within one range or another, the combination of at least some of them is used to derive what is the status of the corresponding target. This, in turn, makes the monitoring and the control subpar because the information about the target and any subsequent control command are based on a less precise status detection.

This problematic behavior of classical schemes is exacerbated by greater number of parameters and measurements to take into account to derive the status of the targets, making the schemes unfeasible for accurate monitoring and control.

Deep learning is better suited for the characterization of targets at any point in time. The features of the target can be fed into the deep learning routine, with or without simplifying the values of the features, and then be processed to carry out an inference of the status of the target. Further, such inference can also include control commands, or these be derived afterwards upon determining the status of the target, but in any case, the control commands can be tailored to a more accurate status of the target.

One of the main drawbacks of machine learning routines in the form of neural networks, which are one of the most widely used form of machine learning, is that they are memory greedy, meaning that they require many processing resources and memory allocation to store the routine, especially all the data that is generated in intermediate feature vectors, for example. As a result, computing devices and systems cannot cope with the requirements of such neural networks when they become larger and more complex, and as more complex targets are to be monitored and controlled, so become the neural networks, thus limiting their use or requiring a simplified version thereof to be able to run.

There is interest in finding a machine learning routine that can have the advantages of neural networks, but which are more scalable than said networks, thereby enabling the monitoring and control of complex machines, systems and processes.

### DESCRIPTION

A first aspect relates to an apparatus or system as set out in appended claim 1, that is to say, an apparatus or system comprising at least one classical processor and/or at least one quantum processor that may be configured to at least perform the following:
- convert, into a tensorized neural network (also referred to as TNN in this disclosure), a predetermined machine learning routine in the form of a neural network (also referred to as NN in this disclosure), and the predetermined machine learning routine is associated with a target machine or system or process; and
- produce at least one output about the target machine or system or process, the at least one output being inferred by the converted predetermined machine learning routine upon inputting a data set therein.

For the conversion of the routine from a NN into a TNN, the apparatus or system is configured to at least perform the following:
- convert one or more layers of a plurality of layers of the NN into respective one or more tensor networks; and
- convert one or more first non-linearities (also referred to as global non-linearities in the present disclosure) applicable to the converted one or more layers of the NN into one or more second non-linearities (also referred to as local non-linearities in the present disclosure) applicable to each tensor of the respective one or more tensor networks.

The apparatus or system embeds a machine learning routine in the form of a TNN, which is at least capable of reducing the memory requirements of an analogous machine learning routine in the form of a NN.

The TNN includes one or more tensor networks, which are linear structures that are capable of simulating complex quantum many-body systems with a complete and scalable description of these systems.

Although TNNs have already been explored in the past, they all featured memory scalability problems and inconsistent inference. The reason for these issues is that NNs have extensive intermediate feature data generated as the data passes through the NNs, including the sparse tensor network components. In this sense, while TNNs could compress a machine learning routine such as a NN, the memory requirements during training and/or inference were not reduced, thus the scaling up of the machine learning routine was not effective.

The feature vectors of the NN could not be compressed due to the existing non-linearities of the NNs, which are applicable to the feature data in a pointwise fashion. As aforesaid, tensor networks are linear structures. Hence, the tensor networks are limited in this regard, because in order to reproduce the applicability of the non-linearities, which are of high relevance in the inference conducted by the NNs, the compressed data would have to be decompressed into a larger data structure, the non-linearities applied thereto, and then compressed once again until further non-linearities were to be applied, at which point the same process would have to be repeated, and so on. The relevance of the non-linearities is due to the high non-linear component of different applications and tasks such as, but without limitation, classifying images.

The apparatus or system addresses this limitation by producing a converted version of the one or more non-linearities that, instead of being applicable to the tensor network, is applicable to the tensors in the respective tensor network. By converting the first non-linearity or non-linearities into the second non-linearity or non-linearities while keeping it/them associated with the respectively converted linear layer into the resulting tensor network, the non-linearities can be applied to the tensor networks without requiring decompression of the feature vector first. Or, in other words, the feature data generated is kept in a compact tensor network representation during the entire forward pass through the network. In this way, it is possible to reduce the memory requirements and, even, the computational resources that would otherwise be necessary for the aforesaid process of decompressing, applying the non-linearity or non-linearities, and compressing again.

The conversion of the layer/s of the NN into the tensor network/s can be conducted according to processes known in the art.

The conversion of the global non-linearity/ies of the NN into the local non-linearity/ies is preferably performed such that the resulting non-linearity partially or completely reproduces the behavior of the global non-linearity/ies.

The produced at least one output can be provided as an output of the apparatus or system like, for example: in the form of data or user perceptible signals so that, subsequently, other apparatus or system, or even a person, may process such output/s and provide one or more inputs for the target or a controller thereof; or in the form of one or several instructions for automatic configuration or reconfiguration of the target or the controller thereof.

In some embodiments of this aspect, the apparatus or system is further configured to add at least one gauge optimization in the converted neural network.

As known in the art, it is possible to modify tensors of a tensor network without modifying the data represented by the tensor network by way of gauge optimizations, namely, the contraction of the tensor network with the modified tensors remains the same. In this sense, one or more resolutions of identity can be added, particularly on internal bonds of tensors, to introduce a gauge optimization that alters the tensor but not the tensor network. This, in turn, can lead to a reduction of the computational resources required for running the machine learning routine in the form of the TNN and/or an increase of the numerical precision of the machine learning routine owing to the adaptation of the tensors into, e.g., a more stable format thereof as known in the art.

In some embodiments of this aspect, the at least one gauge optimization is selected from a predetermined set of gauge optimizations.

Sometimes, depending on the global non-linearity/ies to be converted, it may be established that particular gauge optimization may attain good results in terms of resemblance of the local non-linearity/ies to the global non-linearity/ies, especially if the conversion of the global non-linearity/ies into local one/s is not accurate enough. Additionally or alternatively, the gauge optimizations may include parameters that can be adjusted to achieve a greater similarity between the local non-linearity/ies and the global non-linearity/ies. Concerning the latter, in some embodiments, the at least one gauge optimization comprises a trainable parameter that tunes the respective gauge optimization. Further, the apparatus or system is also configured to train the predetermined machine learning routine in the form of the TNN with a set of training data such that the training adjusts the trainable parameter of at least one gauge optimization so that at least one of the one or more first non-linearities apply a non-linearity (e.g., a non-linear factor or term) to tensors that resembles more to the respectively converted second non-linearity than if no gauge optimization had been applied thereto. The gauge optimization therefore are optimizable as well so as to be able to obtain a machine learning routine with more precise inference.

A second aspect relates to an apparatus or system as set out in appended claim 7, that is to say, an apparatus or system comprising at least one classical processor and/or at least one quantum processor that may be configured to at least perform the following:
- provide a predetermined machine learning routine in the form of a tensorized neural network, and the predetermined machine learning routine is associated with a target machine or system or process; and
- produce at least one output about the target machine or system or process, the at least one output being inferred by the provided predetermined machine learning routine upon inputting a data set therein.

The tensorized neural network at least comprises:
- a plurality of layers, each layer comprising a respective tensor network that is to comprise intermediate feature data about the target machine or system or process; and
- one or more non-linearities per layer applicable to each tensor of the tensor network of the respective layer.

The apparatus or system of this aspect, like in the first aspect, includes a machine learning routine in the form of a TNN that, in comparison with an analogous routine but in the form of a NN, has reduced memory requirements.

The machine learning routine can be provided directly in the form of a TNN. That is to say, it is not necessary to first provide a routine in the from of a NN and then convert into a routine in the form of a TNN. The routine has the TNN defined right from the start with multiple tensor networks that are analogous to layers of a NN; the apparatus or system reduces the computational burden of providing the TNN-based machine learning routine without having an NN provided first.

The number of tensors of each tensor network and the bond dimension of the tensor networks can be selected according to predetermined values, for instance depending on the type of inference that is required, and/or the type of target that is being monitored or controlled, and/or the number of features that will be fed into the machine learning routine for provision of the at least one output.

By contrast to known machine learning routines based on TNNs, the apparatus or system of this aspect has, in the TNN, one or a plurality of local non-linearities that are to be applied to each tensor so that the linear structure behaves non-linearly, thereby having a behavior similar to a NN in which there are global non-linearities per layer. The number and type of non-linearities in the tensor networks can also be selected according to predetermined values and made dependent upon one or more of the previously mentioned criteria: type of inference, type of target, and/or number of features to be considered.

A third aspect relates to an apparatus or system comprising at least one classical processor and/or at least one quantum processor that may be configured to at least perform the following:
- convert one or more first non-linearities (i.e., global non-linearities) applied to a layer with one or more tensors of a predetermined machine learning routine into one or more second non-linearities (i.e., local non-linearities) applicable to each tensor of the one or more tensors of the respective layer; and
- produce at least one output about the target machine or system or process, the at least one output being inferred by the converted predetermined machine learning routine upon inputting a data set therein.

The predetermined machine learning routine is or comprises a tensorized neural network. The apparatus or system thus converts one or more existing TNNs with global non-linearities into one or more TNNs with local non-linearities, thereby attaining advantages as those described above in relation to the aforesaid aspects.

In some embodiments of any one of the second and third aspects, the apparatus or system is further configured to add at least one gauge optimization in the tensorized neural network.

Gauge optimizations may also be included in TNN-based routine directly provided or directly converted from a TNN-based routine with the object of tuning the local non-linearity/ies. For example, the gauge optimization might include one or more trainable parameters that can then be modified during a training process.

In some embodiments of any one of the first, second and third aspects, the apparatus or system is further configured to train the predetermined machine learning routine in the form of the tensorized neural network with a training data set.

The training of the TNN-based routine can be in any way known in the art, including in the same fashion that an NN-based routine is trained. In this regard, widely-available libraries such as, but without limitation, PyTorch or TensorFlow, which may be equipped with automatic differentiation, are able to train the routine.

In some embodiments of any one of the first, second and third aspects, the apparatus or system is further configured to obtain at least part of the data set from at least one or more sensors and/or one or more computing devices. The one or more sensors and/or the one or more computing devices may be communicatively coupled with the target machine or system, or a controller of the target process, or a controller of the target machine or system.

The apparatus or system is couplable to the target, or to computing devices or a controller thereof, for the use of the machine learning routine so that features about the target can be detected and considered in the routine for the inference of the at least one output. A similar configuration is likewise possible for the training of the machine learning routine, even though other sources of data can be used as well.

In some embodiments of any one of the first, second and third aspects, the apparatus or system is further configured to provide, at least based on the at least one output, at least one instruction for actuation of one or more actuators and/or controllers of the target machine or system or process.

A fourth aspect refers to a system as set out in appended claim 11, that is to say, a system that may comprise a controller that comprises or is communicatively coupled (or couplable) with an apparatus or system according to the first aspect or the second aspect or the third aspect. The system further comprises the target machine or system.

A fifth aspect relates to a method as set out in appended claim 12, that is to say, a method that may at least comprise the following:
- converting, into a tensorized neural network, a predetermined machine learning routine in the form of a neural network, and the predetermined machine learning routine is associated with a target machine or system or process by:
   ∘ converting one or more layers of a plurality of layers of the neural network into respective one or more tensor networks; and
   ∘ converting one or more non-linearities applicable to the converted one or more layers of the neural network into one or more non-linearities applicable to each tensor of the respective one or more tensor networks; and
- producing at least one output about the target machine or system or process, the at least one output being inferred by the converted predetermined machine learning routine upon inputting a data set therein.

The method may be run in an apparatus or system such as, for example, those described with reference to any one of the first, second and third aspects, i.e., an apparatus or system comprising at least one classical processor and/or at least one quantum processor.

In some embodiments of the first aspect or the fifth aspect, the predetermined machine learning routine is a trained machine learning routine that is converted into the TNN.

The routine as converted into a TNN-based machine learning routine may originate from a NN-based machine learning routine that is already trained. This, in turn, improves the at least one output that the TNN-based routine will produce as the tensor networks that the layers are converted into will be influenced by the trained neural network. Even if the NN-based routine was trained, the TNN-based routine can additionally be trained to yield superior results.

In some embodiments of the first aspect or the fifth aspect, the converted one or more layers of the plurality of layers of the NN comprises all layers of the plurality of layers of the NN.

The entirety of the neural network can be replaced by a TNN with multiple tensor networks and non-linearities in order to take full advantage of the benefits of the TNN.

In some embodiments of this aspect, the method further comprises adding at least one gauge optimization in the converted neural network.

In some embodiments of this aspect, the at least one gauge optimization is selected from a predetermined set of gauge optimizations.

In some embodiments of this aspect, the at least one gauge optimization comprises a trainable parameter that tunes the respective gauge optimization. Further, the method also comprises training the predetermined machine learning routine in the form of the TNN with a training data set such that the training adjusts the trainable parameter of at least one gauge optimization so that at least one of the one or more first non-linearities apply a non-linearity (e.g., a non-linear factor or term) to tensors that resembles more to the respectively converted second non-linearity than if no gauge optimization had been applied thereto.

A sixth aspect relates to a method as set out in appended claim 13, that is to say, a method that may at least comprise the following:
- providing a predetermined machine learning routine in the form of a tensorized neural network, and the predetermined machine learning routine is associated with a target machine or system or process, the tensorized neural network comprising:
   ∘ a plurality of layers, each layer comprising a respective tensor network that is to comprise intermediate feature data about the target machine or system or process; and
   ∘ one or more non-linearities per layer applicable to each tensor of the tensor network of the respective layer; and
- producing at least one output about the target machine or system or process, the at least one output being inferred by the provided predetermined machine learning routine upon inputting a data set therein.

The method may be run in an apparatus or system such as, for example, those described with reference to any one of the first, second and third aspects, i.e., an apparatus or system comprising at least one classical processor and/or at least one quantum processor.

A seventh aspect relates to a method that may at least comprise the following:
- converting one or more first non-linearities applied to a layer with one or more tensors of a predetermined machine learning routine into one or more second non-linearities applicable to each tensor of the one or more tensors of the respective layer; and
- producing at least one output about the target machine or system or process, the at least one output being inferred by the converted predetermined machine learning routine upon inputting a data set therein.

The method may be run in an apparatus or system such as, for example, those described with reference to any one of the first, second and third aspects, i.e., an apparatus or system comprising at least one classical processor and/or at least one quantum processor.

In some embodiments of any one of the fifth, sixth and seventh aspects, the method comprises training the predetermined machine learning routine in the form of the tensorized neural network with a training data set.

In some embodiments of any one of the fifth, sixth and seventh aspects, the method comprises obtaining at least part of the data set from at least one or more sensors and/or one or more computing devices.

In some embodiments of any one of the fifth, sixth and seventh aspects, the method comprises providing, at least based on the at least one output, at least one instruction for actuation of one or more actuators and/or controllers of the target machine or system or process.

In some embodiments of any one of all the aforesaid aspects, the target machine or system or process comprises one of: a computing device or system, a factory line or a machine thereof, a factory, a production process of a factory line or a factory, means of transportation or an automatic control unit thereof, an automatic transportation controlling process, an electric grid or network, an energy power plant (such as, e.g., a wind farm, a solar farm, a hydrogen production plant, etc.), an electric power station, an electric power generation process, an electrical energy allocation process, etc.

In some embodiments of any one of all the aforesaid aspects, the at least one output comprises one of: prediction of a failure of a machine (e.g., a factory line or machine thereof, a means of transportation, a computing device or system, etc.), determination of a predictive maintenance of a machine, production amount of energy (by, e.g., an energy power plant, an electric plant, a solar farm, a wind farm, etc.), production amount of a substance (e.g., hydrogen by a hydrogen production plant) or an object (e.g., goods by a factory), actuation of a control unit of means of transportation, etc.

In some embodiments of any one of all the aforesaid aspects, the at least one quantum processor comprises or is part of a variational quantum circuit on one or more universal gate-based quantum computers, such as those based on superconducting qubits, cold atoms, ion traps, photonic systems, quantum dots, etc.

In some embodiments of any one of all the aforesaid aspects, the one or more local and global non-linearities comprise at least one exponential function, and/or at least one rectified linear unit (ReLU), and/or at least one hyperbolic tangent function, and/or at least one sigmoid function.

By way of example, for the exponential function, all the entries (i.e., components) of every tensor of a resulting converted tensor network with features about the target resulting from running the machine learning routine are replaced by respective exponential functions, e.g., exp(ax), where a is a modifiable parameter, and x is the entry. By way of another example, for the ReLU function, all the entries of every tensor of a resulting converted tensor network with features about the target has its negative entries replaced by zeros, e.g., max(x,0), where x is the entry.

Aside from the aforesaid functions, it will be noted that other functions are likewise possible and they also fall within the scope of the present disclosure.

Similar advantages as those described in relation to the first, second and third aspects also apply to the fourth, fifth, sixth and seventh aspects.

An eighth aspect relates to a computer program comprising instructions which, when the program is executed by at least one computing device with at least one classical processor, cause the at least one computing device to carry out the steps of a method as disclosed in the fifth aspect or the sixth aspect or the seventh aspect.

In some embodiments, the computer program is embodied on a non-transitory computer-readable storage medium storing the computer program.

A ninth aspect relates to a data carrier signal carrying a computer program as described in the eighth aspect.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows an apparatus or system in accordance with embodiments.
Figures 2 and 3 show methods in accordance with embodiments.
Figures 4A and 4B show an NN-based machine learning routine.
Figure 5 shows a TNN-based machine learning routine in accordance with embodiments.
Figure 6 partially shows a TNN-based machine learning routine in accordance with embodiments.

### DETAILED DESCRIPTION

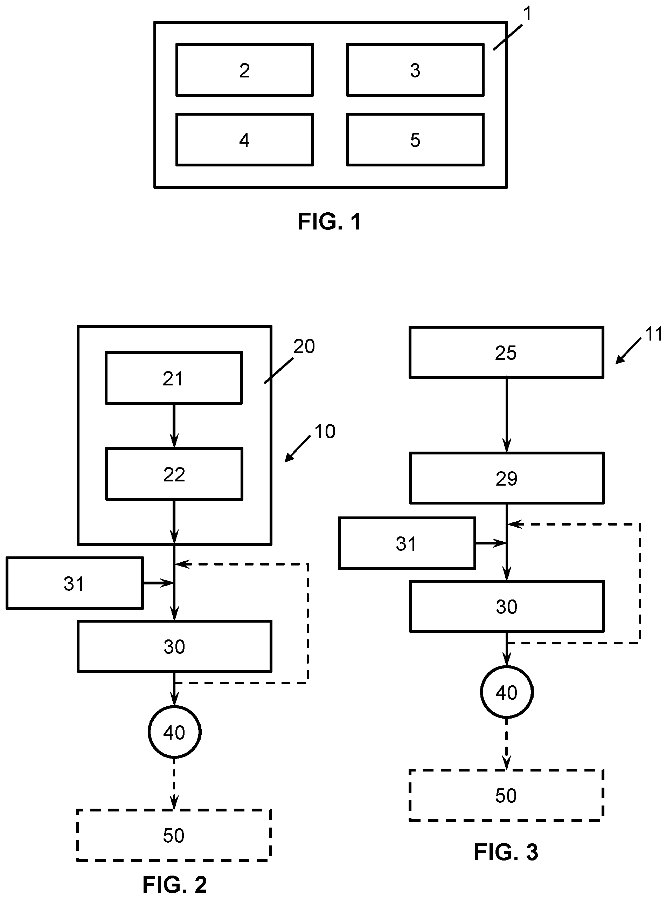

Figure 1 shows an apparatus or system 1 in accordance with embodiments.

The apparatus or system 1 includes one or more classical processors 2 and/or one or more quantum processors 3, namely there may be processors of just one type or both types. The apparatus or system 1 also includes at least one memory 4 for storage of data such as a machine learning routine in the form of a TNN. The at least one memory 4 may also be used for storage of the data generated while running the machine learning routine, especially feature vectors and inputs and/or outputs. Additionally, the at least one memory 4 may store a computer program in the form of instructions that, upon running, perform a method according to the present disclosure.

In case of a system, the system may include one or more apparatuses adapted to provide a machine learning routine in the form of a TNN according to the present disclosure.

When one or more quantum processors 3 are part of the apparatus or system 1, a converter for converting electrical signals into the type of signal processed by the quantum processor/s 3 and vice versa may be arranged, either as part of the apparatus or system 1, or externally, in the latter case, the at least one data communications module may be used for transmitting data to and receiving data from the converter.

In some embodiments, one or more classical processors of the at least one classical processor comprises or is part of at least one field-programmable gate array (i.e., FPGA), and the at least one FPGA stores and/or runs the predetermined machine learning routine in the form of the TNN for producing the at least one output.

In some embodiments, one or more classical processors of the at least one classical processor is different from and does not comprise an FPGA, and said one or more classical processors store and/or run the predetermined machine learning routine in the form of the NN.

Figure 2 shows a method 10 in accordance with embodiments.

The method 10 has a step of converting 20 a predetermined machine learning routine in the form of a neural network into the predetermined machine learning routine but in the form of a tensorized neural network. The machine learning routine relates to a target machine or system or process that is to be monitored and, optionally, controlled.

To perform the conversion of the routine from a NN into a TNN, the method 10 has a step of converting 21 one, some or all linear layers of a plurality of linear layers of the neural network into respective tensor networks so that each linear layer of the NN that is converted becomes a tensor network. In cases where the NN has already been trained, the converted layers are trained layers, therefore the TNN-based routine already benefits from said previous training. The tensor network decomposition can be selected per layer of NN (and per layer of TNN), and the size and number of tensors can be selected per tensor network, depending, for example, on the characteristics of the problem at hand (e.g. type of target, type and number of outputs, number of features, etc.) and the computational resources that will be needed to run the TNN and the desired accuracy in the output/s provided. The size of the tensors will also influence the number of trainable parameters, the smaller the size, the smaller the number of parameters. In fact, it has been found that TNNs according to the present disclosure can reproduce the accuracy of a NN with fewer trainable parameters than those in the NN. Further, the method 10 has a step of converting 22 one, some or all non-linearities applicable to the converted layers of the NN into non-linearities applicable to each tensor of the respective tensor networks resulting from the converting 21 step. Such resulting non-linearities will be applied locally to each component of the respective tensors, thereby simulating the non-linear behavior of the NN-based routine while not requiring expanding the contracted tensor network for applying the non-linearities.

Once the converting 20 step has been completed, in preferred embodiments, the method 10 has a step (not illustrated) of training the converted machine learning routine so as to improve the results provided by said routine. The training can be any known in the art and be dependent upon the type of data that the routine is to produce, thus it can be supervised learning, reinforced learning or unsupervised learning. For proper operation of the routine, it should be trained at least once, be it while the routine was in NN form and/or after the conversion has been performed.

The method 10 also has a step of inputting 31 a data set into the converted routine, i.e., the TNN-based routine, for the step of producing 30 at least one output 40 about the target machine or system or process by way of inference. As the tensor network/s within the routine can be contracted and the non-linearities applied directly to the tensors, the converted routine will be able to benefit from reduced memory requirements, thereby easing the use of the machine learning routine to more complex applications. In this regard, in some embodiments, the TNN occupies less space in the at least one memory than the NN. That is to say, the space required in memory for storing the TNN and, thus, the machine learning routine with the TNN is less than the space required for storing the NN and, thus, the machine learning routine with the NN.

Further, the method 10 may also include repeated inputting 31 and production 30 of outputs as indicated with the dashed arrow line. With each pass, the routine may also adjust the values of the tensors in the tensor networks and of the neurons in the linear layers of the neural networks, if any was kept and, thus, not converted into a tensor network.

The produced output/s provide information about the target, thereby enabling its monitoring, especially what is the status thereof based on the features inputted into the routine. The output/scan also serve for controlling the target. To that end, the method 10 may also include a step of producing 50 at least one instruction for actuation of one or more actuators and/or controllers of the target machine or system or process based on outputs produced 40 before.

Figure 3 shows a method 11 in accordance with embodiments.

The method 11 has a step of providing 20 a predetermined machine learning routine in the form of a tensorized neural network. The machine learning routine relates to a target machine or system or process that is to be monitored and, optionally, controlled.

The routine includes a plurality of layers in the form of tensor networks. The tensor networks will have multiple tensors, and each tensor will eventually include intermediate feature data about the target machine or system or process. The routine also includes one or more non-linearities per layer, i.e., per tensor network, applicable to each tensor of the respective tensor network.

The method 11 has a step of training 29 the TNN-based machine learning routine so as to improve the results provided by said routine. The training can be any known in the art and be dependent upon the type of data that the routine is to produce, thus it can be supervised learning, reinforced learning or unsupervised learning.

The method 11 also has the steps of inputting 31 a data set into the TNN-based routine for producing 30 the at least one output 40 as described with reference to Figure 2. The method 11 may likewise also include the step of producing 50 at least one instruction for actuation as described with reference to Figure 2.

In some embodiments of the methods 10, 11 and of any one of the aforesaid aspects, one or more outputs of the at least one output are values related to:
- predictive maintenance of the target, e.g., a factory line, an energy power plant, etc.; or
- forecasting of weather conditions for an energy power plant such as, e.g., wind farm, solar farm, etc.; or
- forecasting of power production by an energy power plant; or
- optimization of the target, e.g., a factory line, an energy power plant, an electric market, etc., the optimization being, for example, of resources of the target, or an energy consumption by the target, etc.; or
- cost function optimization in machine learning algorithms (both supervised and unsupervised), such as in neural networks; or
- solution of combinatorial optimization problems, with and without constraints; or
- optimization of air/sea/road traffic of means of transportation, e.g. air, sea, road, etc.; or
- portfolio optimization in finance; or
- optimization of cost functions in computer vision systems, factories and other environments.

In some embodiments of the methods 10, 11 and of any one of the aforesaid aspects, the bond dimension is selected to be a predetermined value. For example, in some embodiments, each tensor network of the tensorized neural network comprises a bond dimension equal to or less than 50, preferably equal to or less than 10, and more preferably equal to or less than 5.

The bond dimensions, which are values that define the tensor networks, influence the numerical accuracy of the outputs provided by the routine since the bond dimensions establish the level of correlation between the tensors. Greater bond dimensions will result in more accurate outputs, yet the computational resources needed for running the routine will increase. It has been found that the aforesaid bond dimension values provide an adequate trade-off between accuracy and computational resources.

In some embodiments of the methods 10, 11 and of any one of the aforesaid aspects, a number of tensors in each tensor network is selected to be a predetermined value. For example, in some embodiments, each tensor network of the tensorized neural network comprises a number of tensors equal to or less than 50, preferably equal to or less than 10, and more preferably equal to or less than 5.

In some embodiments of the method 10 and of any one of the first and fifth aspects, the number of tensors in a converted tensor network is equal to or less than two times the number of neurons of the respective linear layer of the neural network.

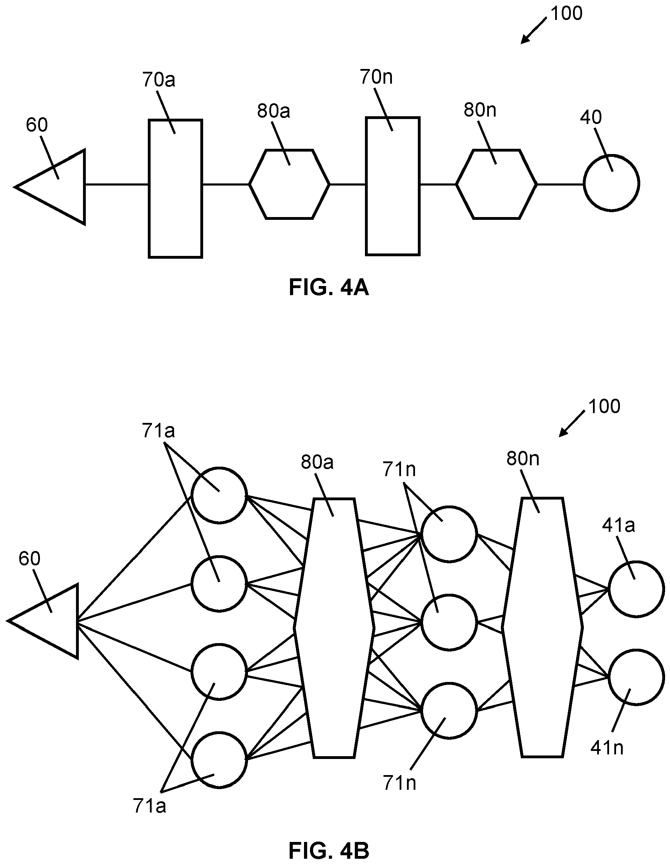

Figures 4A and 4B show an NN-based machine learning routine 100 known in the art with different representations.

The NN-based routine 100 has an input layer 60 with a number of features about a target, a plurality of linear layers 70a-70n that each comprises neurons 71a-71n, global non-linearities 80a-80n per linear layer, and an output layer 40 with one or more outputs 41a-41n. At each linear layer or intermediate layer 70a-70n, intermediate features are generated in each pass of the NN-based routine 100, which are then processed globally with the respective global non-linearity 80a-80n. The global non-linearities can be, for example, ReLU functions, sigmoid functions, etc.

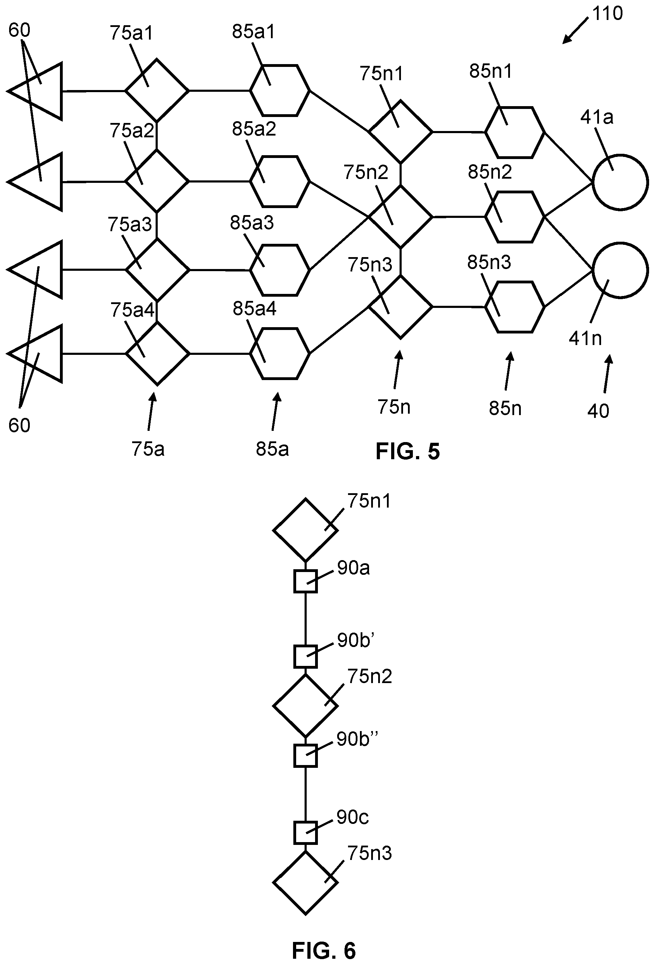

Figure 5 shows a TNN-based machine learning routine 110 in accordance with embodiments.

The TNN-based routine 110 has one or more input layers 60, one or more layers in the form of tensor networks 75a-75n that each comprises tensors 75a1-75a4, 75n1-75n3, local non-linearities 85a-85n that each comprises a local non-linearity 85a1-85a4, 85n1-85n4 applicable to a respective tensor, the routine 110 therefore being a locally-activated TNN, and an output layer 40 with one or more outputs 41a-41n.

As data is introduced from the input layer/s 60, it passes through the tensors 75a1-75a4, 75n1-75n3, and each tensor is then locally modified by the respective local non-linearities 85a1-85a4, 85n1-85n4 (e.g., hyperbolic tangent function, ReLU function, exponential function, etc.) before reaching a tensor of a subsequent tensor network or an output of the one or more outputs 40. Such structure allows effective generation and processing of the intermediate features, and reduced memory requirements.

Concerning memory requirements, the following table qualitatively indicates the amount of memory that is required for analogous machine learning routines with different types of networks:

| **Architecture** | **Memory required to store the linear layer** | **Memory required to store the feature vector** |
|---|---|---|
| Neural Network (NN) | D^{2k} | D^{k} |
| Tensorized Neural Network (TNN) with global non-linearity/ies | k D² X² | D^{k} |
| Tensorized Neural Network (TNN) with local non-linearity/ies | k D² X² | k D Φ |

Where D is the number of inputs and outputs per neuron, k is the number of neurons or tensors per layer, X is the bond dimension per tensor network layer (i.e., the dimension of indices of the tensors that are connected in the tensor network layer), and Φ is bond dimension per layer of non-linearities (i.e., the dimension of indices of the tensors that connect in a layer of non-linearities). As it can be appreciated, X and Φ are parameters that can be tuned in the provision of the TNN-based routine, either when directly provided or when provided in the form of a conversion from an NN-based routine. By tuning these parameters, the memory requirements of a TNN-based routine can be lower than those of an analogous NN-based routine or a TNN-based routine with global non-linearities.

Concerning processing times and computational resources needed for running the machine learning routines, the following table qualitatively compares the different types of networks:

| **Architecture** | **Compression** | **Training and inference speed** | **Scalability** |
|---|---|---|---|
| Neural Network (NN) | None | Slow for large networks | Large networks are non-scalable |
| Tensorized Neural Network (TNN) with global non-linearity/ies | Better than NN | Sometimes faster than NN | More scalable than NN |
| Tensorized Neural Network (TNN) with local non-linearity/ies | Better than NN and TNN with global non-linearity/ies | Faster than NN and TNN with global non-linearity/ies | More scalable than NN and TNN with global non-linearity/ies |

In some embodiments, each non-linearity of the TNN-based routine 110 can be a tensor, and each set of non-linearities 85a-85n associated with a tensor network 75a-75n can be defined as a tensor network as well, which may also simplify the processing of the machine learning routine owing to how tensor networks can be processed in classical and/or quantum processors, especially contractions of tensor networks.

Although the TNN- and NN-based routines 110, 100 have been illustrated with two layers and three and four tensors or neurons each, it will be noted that these are mere examples of the present disclosure and that additional layers and other numbers of tensors and/or neurons are likewise possible within the scope of the present disclosure. Moreover, although the tensor networks of the TNN-based routine 110 have been illustrated as one-dimensional, it will be noted that this is a mere example of the present disclosure and that other dimensions are likewise possible within the scope of the present disclosure

Figure 6 partially shows a TNN-based machine learning routine in accordance with embodiments.

The part of the routine shown is a tensor network layer like any one shown with reference to Figure 5. In this case, the tensor network includes at least three tensors 75n1-75n3. In the entire TNN-based routine, such tensor network is connected to other layers, such as input layers, output layers, linear layers (in case not all linear layers of an NN-based routine have been converted into tensor network) and/or tensor network layers.

In this example, the tensor network layer includes gauge optimizations 90a, 90b'-90b", 90c, which are arranged between neighboring tensors of the same tensor network. The gauge optimizations can be adjusted or trained so as to reproduce better desired non-linearities applicable to the tensors.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An apparatus or system comprising at least one classical processor and/or at least one quantum processor configured to:
convert, into a tensorized neural network, a predetermined machine learning routine in the form of a neural network and associated with a target machine or system or process by:
converting one or more layers of a plurality of layers of the neural network into respective one or more tensor networks; and
converting one or more first non-linearities applicable to the converted one or more layers of the neural network into one or more second non-linearities applicable to each tensor of the respective one or more tensor networks; and
produce at least one output about the target machine or system or process, the at least one output being inferred by the converted predetermined machine learning routine upon inputting a data set therein.

2. The apparatus or system of claim 1, wherein the predetermined machine learning routine is a trained machine learning routine that is converted into the tensorized neural network.

3. The apparatus or system of any one of the preceding claims, further configured to add at least one gauge optimization in the converted neural network, the at least one gauge optimization being selected from a predetermined set of gauge optimizations.

4. The apparatus or system of claim 3, wherein the at least one gauge optimization includes a trainable parameter that tunes the respective gauge optimization; and the apparatus or system is further configured to train the predetermined machine learning routine in the form of the tensorized neural network with a training data set such that the training adjusts the trainable parameter of the at least one gauge optimization so that the non-linearity applied by at least one of the one or more second non-linearities is more similar to the respectively converted one or more first non-linearities.

5. The apparatus or system of any one of the preceding claims, further comprising at least one memory adapted to store the neural network and the tensorized neural network, wherein the tensorized neural network occupies less space in the at least one memory than the neural network.

6. The apparatus or system of any one of the preceding claims, wherein the converted one or more layers of the plurality of layers of the neural network comprises all layers of the plurality of layers of the neural network.

7. An apparatus or system comprising at least one classical processor and/or at least one quantum processor configured to:
provide a predetermined machine learning routine in the form of a tensorized neural network and associated with a target machine or system or process, wherein the tensorized neural network comprises:
a plurality of layers, each layer comprising a respective tensor network that is to include intermediate feature data about the target machine or system or process; and
one or more non-linearities per layer applicable to each tensor of the tensor network of the respective layer; and
produce at least one output about the target machine or system or process, the at least one output being inferred by the provided predetermined machine learning routine upon inputting a data set therein.

8. The apparatus or system of any one of the preceding claims, further configured to train the predetermined machine learning routine in the form of the tensorized neural network with a training data set.

9. The apparatus or system of any one of the preceding claims, further configured to obtain at least part of the data set from at least one or more sensors and/or one or more computing devices.

10. The apparatus or system of any one of the preceding claims, further configured to provide, at least based on the at least one output, at least one instruction for actuation of one or more actuators and/or controllers of the target machine or system or process.

11. A system comprising a controller comprising or being communicatively couplable with the apparatus or system of any one of the preceding claims, and the target machine or system.

12. A method, comprising:
converting, into a tensorized neural network, a predetermined machine learning routine in the form of a neural network and associated with a target machine or system or process by:
converting one or more layers of a plurality of layers of the neural network into respective one or more tensor networks; and
converting one or more non-linearities applicable to the converted one or more layers of the neural network into one or more non-linearities applicable to each tensor of the respective one or more tensor networks; and
producing at least one output about the target machine or system or process, the at least one output being inferred by the converted predetermined machine learning routine upon inputting a data set therein.

13. A method, comprising:
providing a predetermined machine learning routine in the form of a tensorized neural network and associated with a target machine or system or process, wherein the tensorized neural network comprises:
a plurality of layers, each layer comprising a respective tensor network that is to include intermediate feature data about the target machine or system or process; and
one or more non-linearities per layer applicable to each tensor of the tensor network of the respective layer; and
producing at least one output about the target machine or system or process, the at least one output being inferred by the provided predetermined machine learning routine upon inputting a data set therein.

14. The apparatus or system of any one of claims 1-11, or the method of any one of claims 12-13, wherein the target machine or system or process comprises one of: a computing device or system, a factory line or a machine thereof, a factory, a production process, means of transportation or an automatic control unit thereof, an automatic transportation controlling process, an electric grid or network, an energy power plant, an electric power station, an electric power generation process, and an electrical energy allocation process.

15. The apparatus or system of any one of claims 1-11 or 14, or the method of any one of claims 12-14, wherein the at least one output comprises one of: prediction of a failure of a machine, determination of a predictive maintenance of a machine, production amount of energy, production amount of a substance or an object, and actuation of a control unit of means of transportation.
